# FASCICULE DE BREVET EUROPEEN

(11) **EP 1 808 023 B1**
(45) Date de publication et mention de la délivrance du brevet: **15.04.2009**
(21) Numéro de dépôt: 05810810.1
(22) Date de dépôt: 11.10.2005
(51) Int. Cl.: H04N 7/26, H04N 7/34, H04N 7/36, H04N 7/46

(54) **PROCEDE DE CODAGE HIERARCHIQUE D'IMAGES VIDEO**
VERFAHREN ZUR HIERARCHISCHEN KODIERUNG VON VIDEOBILDERN
METHOD FOR HIERARCHICALLY CODING VIDEO IMAGES

(30) Priorité: 20.10.2004 FR 0411127
(43) Date de publication de la demande: 18.07.2007
(73) Titulaire: Thomson Licensing, 92100 Boulogne-Billancourt (FR)
(72) Inventeur: FRANCOIS, Edouard, F-35890 Bourg des Comptes (FR); MARQUANT, Gwenaelle, F-35630 LA CHAPELLE CHAUSSIE (FR); VIERON, Jérôme, F-35137 BEDE (FR)
(74) Mandataire: Berthier, Karine
(86) Numéro de dépôt international: PCT/FR2005/050839
(87) Numéro de publication internationale: WO 2006/042990

(56) Documents cités:
- EP-A- 0 753 970
- EP-A- 0 883 300
- WO-A-01/77871
- US-A- 4 903 317
- US-A- 5 742 343

## Description

L'invention concerne un procédé et dispositif de codage et décodage hiérarchique d'images vidéos de différents formats non proportionnels. Elle concerne en particulier des images ayant une partie vidéo commune. Il s'agit par exemple du codage d'un signal de télévision numérique au format SD, acronyme de l'anglais Standard Definition et au format haute définition HD.

Les codeurs vidéo à échelonnabilité spatiale sont du domaine connu. Le flux de données généré par le codeur vidéo a une hiérarchie échelonnable, les données codées sont incorporées dans le flux de manière hiérarchique, avec échelonnabilité spatiale. Les formats vidéo concernés par ces codeurs sont ceux pour lesquels les dimensions de la résolution haute correspondent à un multiple de 2 de celles de la résolution basse, permettant une décomposition dyadique. Ainsi, un codage compatible d'un format QCIF, acronyme de l'anglais Quarter Common Intermediate Format et de dimensions 176 x 144 et d'un format CIF, de dimensions 352 x 288, ou bien un codage compatible d'un format CIF et d'un format 4 CIF, de dimensions 704 x 576, s'obtient par sous-échantillonnage et filtrage de l'image haute résolution.

Le codage hiérarchique permet d'obtenir une couche de base, relative au format basse résolution, et une couche supérieure qui correspond au format de plus grande résolution. Les données complémentaires relatives à la couche supérieure sont généralement calculées selon le procédé suivant :
- codage de l'image basse résolution et décodage local de cette image codée pour obtenir une image reconstruite,
- mise à l'échelle ou zoom de l'image basse résolution reconstruite, par exemple par interpolation et filtrage, pour obtenir une image au format haute résolution,
- différence, pixel à pixel, des valeurs de luminance de l'image source et de l'image reconstruite ou d'une image de prédiction basée sur cette image reconstruite pour obtenir des résidus constituant les données de la couche supérieure.

Ainsi, le codage de l'image haute résolution exploite l'image basse résolution mise à l'échelle comme image de prédiction.

Ce codage n'est efficace que dans le cas ou les images peuvent être superposées. Le coût de codage de l'image haute résolution n'est pas optimisé si les résolutions ou formats d'images ne sont pas proportionnels. Si le format haute résolution n'est pas lié au format basse résolution par une transformation dyadique, une partie de l'image au format haute résolution correspond à une zone vidéo extérieure à celle codée par l'image basse résolution et ne prend donc pas cette image comme image de prédiction. Ainsi, le codage de l'ensemble de l'image haute résolution, en particulier si elle possède des zones vidéo importantes non communes à l'image basse résolution, peut être d'un coût élevé. D'autre part, les modes de codage classiques utilisés ne permettent pas d'optimiser le coût de codage de l'image haute résolution.

Le document WO0177871, qui représente l'état de la technique le plus proche, décrit un procédé de codage hiérarchique d'images vidéo de différents formats non proportionnels pour donner un flux de données codées, une première image à un premier format et une deuxième image à un deuxième format de résolution inférieure au premier format, le contenu vidéo des deux images ayant au moins une partie commune, ledit procédé mettant en oeuvre une étape de codage de la deuxième image pour fournir des données codées à une couche de base du flux de données codées, une étape de zoom de la deuxième image pour obtenir une image basse résolution zoomée, une étape de codage de l'image haute résolution pour fournir des données codées à une couche supérieure du flux de données codées et exploitant un mode de codage prédictif inter couches exploitant une image courante basse résolution zoomée comme image de prédiction dans laquelle est déterminé un bloc prédit et un vecteur mouvement définissant ce bloc.

L'invention a pour but de pallier les inconvénients précités. Un des objets de l'invention est un procédé de codage hiérarchique d'images vidéo défini par les revendications ensuite.

Grâce à ces nouveaux modes de codage de l'image haute résolution, le taux de compression est amélioré. Une meilleure qualité d'image est obtenue pour ces images haute résolution pour un même coût de codage de ces images.

D'autres particularités et avantages de l'invention apparaîtront clairement dans la description suivante donnée à titre d'exemple non limitatif, et faite en regard des figures annexées qui représentent :
- la figure 1, un organigramme du procédé de codage,
- la figure 2, une représentation des formats à coder,
- la figure 3, une illustration des modes de codages.

Le procédé de codage des données est un procédé de codage hiérarchique, c'est à dire que le flux de données codées est structuré de manière hiérarchique, les données relatives au format de plus faible résolution étant intégrées dans une couche de base ou couche inférieure, les données complémentaires relatives au format de résolution supérieure étant intégrées dans une couche supérieure. Il est ainsi facile, au niveau du flux de données, de sélectionner les seules données relatives à un standard ou un format, en sélectionnant les seules couches correspondant au niveau de résolution souhaité. Il s'agit ici d'échelonnabilité spatiale, compatible de toute échelonnabilité temporelle exigée par le standard relatif au format de résolution.

L'invention concerne le codage de contenus vidéo à différents formats non proportionnels en largeur et/ou hauteur d'image et ayant une partie vidéo commune. Un des formats est de résolution inférieure à l'autre format. Il est soit de plus faible définition avec le nombre de pixels par ligne ou le nombre de lignes définissant par exemple la partie vidéo commune inférieur, soit, pour une même définition, de taille inférieure.

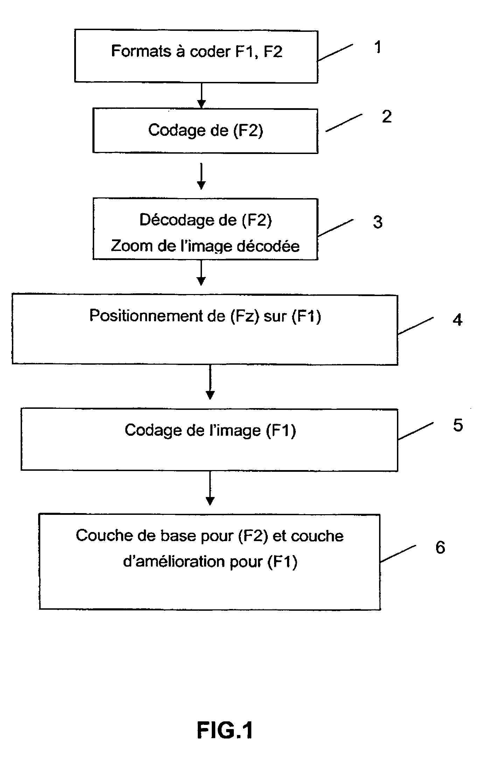

La figure 1 représente un organigramme du procédé de codage selon l'invention.

Une première étape 1 prend en compte les différents formats vidéo à coder. Le flux de données codées obtenu en sortie du codeur permet d'alimenter des décodeurs compatibles d'un de ces formats, la sélection du format, fonction du dispositif d'affichage, du décodeur ou de paramètres tels que le débit de transmission se faisant par filtrage des données au niveau de ce flux de données codées, en amont ou au niveau du décodeur.

Dans l'exemple décrit, un premier format haute résolution F1 et un deuxième format basse résolution F2 sont exploités. Chacun de ces formats est défini par sa largeur L_{F1}, L_{F2} ou nombre de pixels sur une ligne et sa hauteur H_{F1}, H_{F2} ou nombre de lignes.

On considère que les sources vidéo alimentant le codeur sont aux formats F1 et F2. Elles correspondent, pour une partie seulement, à un même contenu vidéo. Pour une partie seulement signifie que le contenu vidéo de ces deux sources est supposé différent, c'est à dire que l'on ne peut pas passer d'un format à l'autre par simple homothétie ou, d'une autre manière, que les formats ne sont pas proportionnels..

Des paramètres géométriques sont également transmis au codeur permettant de définir la partie vidéo commune aux deux formats.

La création de ces images source et le calcul des paramètres géométriques peuvent être effectués de la manière suivante :

A partir des formats choisis, une première et une deuxième fenêtre vidéo sont dimensionnées et positionnées dans une image d'origine pour définir les contenus vidéo de cette image à coder dans chacun des formats. Par hypothèse, ces deux fenêtres se recouvrent au moins partiellement. Elles définissent les contenus vidéo à coder au format F1 et au format F2. Les dimensions de ces premières et deuxièmes fenêtres sont choisies homothétiques respectivement aux formats F1 et F2.

Les images source haute et basse résolution transmises au codeur peuvent avoir la même définition que l'image d'origine ou des définitions différentes de celle de l'image d'origine ou entre elles, selon qu'elles subissent ou non des opérations d'échantillonnage et filtrage. Le terme « définition » signifie ici le nombre de pixels par ligne ou le nombre de lignes pour un contenu vidéo donné. L'image haute résolution, appelée (F1), est choisie comme image de référence pour définir les paramètres géométriques. Il s'agit par exemple de la position de l'image (F2) de format F2 dans l'image (F1) et du rapport de définition qui correspond au zoom à faire subir à l'image (F2) pour mettre en correspondance le contenu vidéo de (F2) au contenu vidéo de (F1) pour la partie commune.

L'étape 2 effectue un codage de l'image vidéo au format F2.

L'étape 3 réalise le décodage de cette image codée pour fournir une image décodée locale ou image reconstruite. Dans une version simplifiée, l'image décodée locale peut consister en l'image d'origine avant codage, c'est à dire en l'image source (F2). Cette image est ensuite mise à l'échelle ou zoomée d'un rapport correspondant au paramètre géométrique relatif au rapport de définition, pour obtenir une image (F2) zoomée, appelée (Fz).

L'étape suivante 4 effectue un positionnement de l'image (Fz) sur l'image haute résolution (F1) en fonction du paramètre géométrique relatif à la position, de manière à faire correspondre les contenus vidéos.

L'étape suivante 5 effectue le codage de l'image haute résolution. Ce codage prend en compte les différents modes de codage objets de l'invention et explicités plus loin.

L'étape 6 insère les données de codage relatives à l'image (F2) dans une couche de base du flux de données et les données de codage spécifiques à l'image haute résolution (F1) dans une couche supérieure.

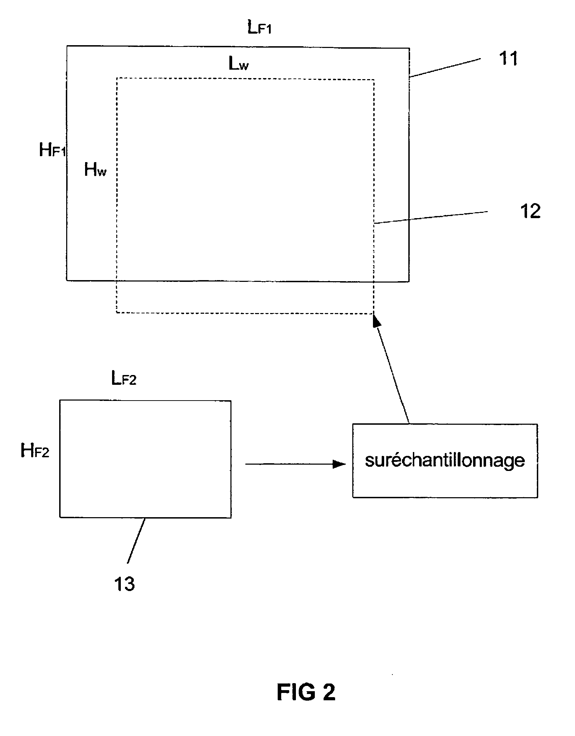

La figure 2 représente un premier contenu vidéo au format de codage haute résolution F1, référence 11 et une fenêtre aux dimensions L_{w} et H_{w}, référence 12. Cette fenêtre est définie et positionnée dans l'image haute résolution à partir des paramètres géométriques. Le contenu vidéo de cette fenêtre est calculé à partir du contenu vidéo au format de codage basse résolution F2 de dimensions L_{F2} et H_{F2}, référence 13. L'image au format F2 est codée puis décodée pour fournir une image décodée locale qui est ensuite suréchantillonnée pour donner une image mise à l'échelle ou zoomée (Fz) aux dimensions de la fenêtre 12.

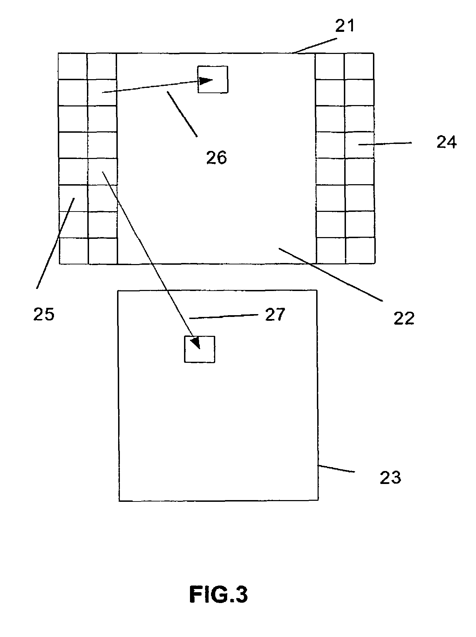

La figure 3 représente différents modes de codage de l'image haute résolution (F1), selon l'invention. L'image suréchantillonnée (Fz) est référencée 23, la fenêtre positionnée dans l'image haute résolution est référencée 22, l'image (F1) est référencée 21. Dans cet exemple, la fenêtre est positionnée au centre de l'image (F1) générant des bandes verticales droite 24 et gauche 25 comme zones de l'image (F1) non recouvertes ou non communes.

L'invention propose d'ajouter de nouveaux modes de codage à des modes déjà connus, pour le codage de l'image haute résolution.

Parmi les modes connus, un premier mode de codage appelé codage prédictif intra exploite un des macroblocs précédemment codés. Le macrobloc courant de l'image courante haute définition est codé en prenant en compte un des macroblocs voisins du macrobloc courant, un macrobloc de l'image courante à gauche ou au dessus du macrobloc courant. Cette sélection est faite en fonction du taux de corrélation avec le macrobloc courant à coder.

Un autre mode de codage également connu, appelé codage prédictif inter, exploite une image haute résolution précédemment codée. Le macrobloc courant de l'image haute résolution est codé à partir d'un macrobloc prédictif qui est un bloc d'image sélectionné dans une fenêtre de recherche d'une image haute résolution précédente. Cette sélection est effectuée en fonction du taux de corrélation avec le macrobloc courant à coder, le bloc d'image sélectionné est défini par un vecteur mouvement.

Les nouveaux modes de codage proposés pour le codage de l'image haute résolution sont décrits ci-après :

Un mode de codage appelé codage prédictif inter couches consiste à exploiter l'image basse résolution mise à l'échelle correspondant, au niveau temporel, à l'image haute résolution à coder. Ce mode de codage utilise des informations de codage appartenant à la couche de base pour le codage d'informations appartenant à la couche supérieure. Le bloc prédictif est recherché dans l'image (Fz), c'est à dire dans l'image au format F2 reconstruite et mise à l'échelle ou zoomée. La sélection du bloc dans l'image (Fz) est fonction du taux de corrélation avec le macrobloc courant. Une information de position est calculée pour définir le bloc d'image sélectionné et transmise dans le flux de données sous forme de vecteur mouvement.

Un autre mode qui est une variante du mode de codage prédictif inter couches exploite une image précédente basse résolution mise à l'échelle. Le bloc prédictif est recherché dans une image (Fz) précédente, c'est à dire une image (F2) reconstruite précédente mise à l'échelle. La sélection du bloc dans l'image (Fz) est fonction du taux de corrélation avec le macrobloc courant. Le bloc est défini à partir d'un vecteur mouvement.

Une variante des modes précédents, mode « par défaut », consiste à exploiter le macrobloc de l'image (Fz) se trouvant à la même position que le macrobloc courant à coder. Dans ce cas, qui ne concerne que le codage des macroblocs de la partie de l'image haute résolution commune à l'image basse résolution, aucun vecteur mouvement n'est transmis. Ce mode évite de coder un vecteur mouvement nul et offre donc un coût de codage moindre.

Un mode de codage appelé mode inter spatial s'applique à une structuration particulière du codage de l'image haute résolution qui se fait en deux phases successives. Le codage de l'image haute résolution n'est pas réalisé séquentiellement, macrobloc par macrobloc, selon un balayage de type télévision mais se fait en une première phase traitant la zone de l'image haute résolution commune à Fz puis une deuxième phase traitant de la partie vidéo non commune à Fz. Les paramètres géométriques permettent de définir la partie de l'image haute résolution commune, au niveau contenu vidéo, à l'image basse résolution. Cette portion d'image est codée, lors de la première phase, en exploitant l'image (F2) reconstruite ou l'image source (F2) zoomée comme image de prédiction. Une image de résidus ou image des hautes fréquences est alors obtenue. La deuxième phase consiste à coder la partie non commune ou image de bords. L'invention propose, pour ce codage, l'utilisation d'un mode particulier de codage, appelé mode inter spatial, parmi les différents modes de codage. Ce mode de codage consiste à coder un macrobloc de la zone non commune à l'image basse résolution en utilisant la zone commune de l'image comme image de prédiction, en indiquant la position du bloc prédictif dans la zone commune à l'aide d'un vecteur mouvement. L'image de prédiction peut être reconstruite à partir de l'image zoomée et de l'image de résidus ou bien peut être déduite de l'image source haute définition en ne sélectionnant de cette image que la partie commune.

A l'étape 4 du procédé de codage, l'image (Fz) est positionnée sur l'image F1. Le procédé code alors cette partie d'image commune par exemple en calculant le résidu prenant en compte l'image (Fz) comme image de prédiction. L'image de résidus est ensuite combinée à l'image reconstruite (F2) zoomée pour fournir une image recombinée qui peut servir de prédiction pour le codage de la partie non commune de l'image haute définition.

En se référant à la figure 3, le mode de codage inter spatial exploite, comme image de prédiction pour le codage des bords, la zone centrale commune 22 reconstruite à partir de l'image basse résolution zoomée 23 et de l'image de résidus correspondant à cette zone commune. Le bloc d'image dans cette zone centrale 22, obtenu par calcul de corrélation, est défini par un vecteur mouvement référencé 26 sur la figure 3.

Le mode de codage inter couches exploite l'image zoomée 23 comme image de prédiction. Le bloc d'image dans l'image zoomée 23, obtenu par calcul de corrélation est défini par le vecteur mouvement référencé 27 sur la figure 3.

L'invention concerne aussi les procédés de décodage d'images sources codées selon le procédé précédemment décrit.

Le décodage consiste alors en l'extraction de données de la couche de base relatives à l'image basse résolution et le décodage de cette image basse résolution, en un zoom de l'image décodée pour donner une image zoomée (Fz), en l'extraction et décodage de données de la couche supérieure en mettant en oeuvre au moins un des modes de décodage suivants.

Il s'agit du mode prédictif inter couche exploitant un bloc dans l'image précédente basse résolution décodée et zoomée (Fz) comme bloc de prédiction, il s'agit aussi du mode prédictif inter couches exploitant un bloc dans l'image courante basse résolution décodée et zoomée comme bloc de prédiction.

Lorsque la couche supérieure est constituée d'une image de résidus relatifs à une image de prédiction (Fz) pour la partie commune à l'image basse résolution et d'une image de bords relative à la partie non commune, le décodage de l'image haute résolution se fait en deux phases. D'abord la partie commune de l'image haute définition est calculée à partir de l'image de résidus et en exploitant l'image basse résolution zoomée comme image de prédiction, c'est la première phase. Ensuite, la partie non commune ou image de bords est décodée en mettant en oeuvre au moins un mode de décodage inter spatial qui consiste à récupérer un bloc d'image dans la partie commune de l'image haute définition, bloc défini par un vecteur mouvement, et à l'utiliser comme bloc de prédiction pour le décodage d'un macrobloc de cette image de bords codé selon le mode inter spatial.

Le procédé de codage mis en oeuvre pour le codage de la couche de base et de la couche supérieure peut être de type hybride, exploitant la corrélation spatiale avec la transformée cosinus discrète ou la transformée par ondelettes spatiale et la corrélation temporelle avec le codage inter-images ou bien de type sous-bande exploitant le codage sous-bande ou le codage ondelettes.

Le procédé de codage est décrit pour des images source vidéo. Il est également possible, sans sortir du domaine de l'invention, de coder des images sources prétraitées, par exemple des images de sous-bandes. Le procédé peut ainsi s'appliquer sur chacune des images de sous-bandes, basse fréquences et hautes fréquences obtenues par filtrage spatial ou spatio-temporel. La même décomposition sous-bandes étant appliquée aux images basse et haute résolution, les sous-bandes équivalentes de la basse et de la haute résolution peuvent être codées selon le procédé décrit dans l'invention. Par exemple, la sous-bande basse fréquence de l'image basse résolution et de l'image haute résolution peuvent être codées selon ce procédé. Ceci est aussi vrai pour toutes les autres sous-bandes spatiales.

## Revendications

1. Procédé de codage hiérarchique d'images vidéo de différents formats non proportionnels pour donner un flux de données codées, une première image (F1) au format F1 et une deuxième image (F2) au format F2 de résolution inférieure au premier format F1, le contenu vidéo des deux images (F1, F2) ayant au moins une partie commune, mettant en oeuvre les étapes suivantes :
- codage (2) de la deuxième image (F2) pour fournir des données codées à une couche de base du flux de données codées,
- zoom (3) de la deuxième image (F2) pour obtenir une image basse résolution zoomée (Fz) de dimensions celles de la première image (F1) pour la partie vidéo commune,
- codage (5), pour ce qui concerne des blocs d'image de la partie non commune, de la première image haute résolution (F1) pour fournir des données codées à une couche supérieure du flux de données codées et exploitant au moins un des modes suivants :
- codage prédictif inter couches utilisant une image précédente basse résolution zoomée comme image de prédiction dans laquelle est déterminé un bloc prédit et un vecteur mouvement définissant ce bloc,
- codage prédictif inter couches exploitant une image courante basse résolution zoomée comme image de prédiction dans laquelle est déterminé un bloc prédit et un vecteur mouvement définissant ce bloc.

2. Procédé selon la revendication 1, **caractérisé en ce que** le codage (5) de l'image haute résolution est réalisé selon les étapes suivantes :
- codage de la zone de l'image au contenu vidéo commun pour fournir une image de résidus relatifs à l'image de prédiction (Fz),
- décodage de cette zone pour donner une zone commune reconstruite,
- codage de la partie non commune utilisant au moins le mode de codage inter spatial consistant à exploiter la zone commune reconstruite comme image de prédiction pour la détermination d'un bloc prédit.

3. Procédé selon la revendication 1, **caractérisé en ce que** l'image (F2) utilisée pour le zoom est une image reconstruite obtenue par décodage local (3) de l'image codée (F2).

4. Procédé selon la revendication 1, **caractérisé en ce que** le codage prédictif inter couches comporte un sous-mode dans lequel le macrobloc prédit est le macrobloc se trouvant au même emplacement que le macrobloc à coder.

5. Procédé selon la revendication 1, **caractérisé en ce que** le zoom consiste en un suréchantillonnage et filtrage de l'image.

6. Procédé selon la revendication 1, **caractérisé en ce que** les images vidéo sont des images de sous-bandes obtenues par décomposition temporelle de type ondelette ou codage sous-bandes des images source.

7. Procédé de décodage d'un flux de données numériques structuré en au moins une couche de base comprenant des données relatives à une image basse résolution et en une couche supérieure comprenant des données relatives à une image haute résolution, l'image basse résolution correspondant à au moins une partie vidéo de l'image haute résolution, comportant les étapes suivantes :
- extraction de données de la couche de base relatives à l'image basse résolution et décodage de l'image basse résolution,
- zoom de l'image décodée (13) pour donner une image (12) zoomée (Fz),
- extraction et décodage de données de la couche supérieure, pour ce qui concerne des blocs d'image de la partie non commune, en mettant en oeuvre au moins un des modes de décodage suivants :
- mode prédictif inter couche exploitant un bloc dans l'image précédente basse résolution décodée et zoomée (Fz) désigné par un vecteur mouvement,
- mode prédictif inter couches exploitant un bloc (27) dans l'image courante basse résolution décodée et zoomée, désigné par un vecteur mouvement.

8. Procédé de décodage selon la revendication 7, la couche supérieure étant constituée de données codées correspondant à une image de résidus relatifs à une image de prédiction (Fz) pour la partie commune à l'image basse résolution et de données codées correspondant à une image de bords relative à la partie non commune, **caractérisé en ce que,** lors du décodage de l'image haute résolution, la partie commune (22) à l'image basse résolution est d'abord décodée à partir de l'image de résidus et de l'image zoomée et **en ce que** l'image de bords (24, 25) est ensuite décodée en mettant en oeuvre au moins un mode inter spatial exploitant des blocs dans la dite partie commune décodée (22) déterminés par des vecteurs mouvement.

## Claims

1. Hierarchical coding method of different non-proportional formats to give a flow of coded data, a first picture (F1) in format F1 and a second picture (F2) in format F2 of a lower resolution to the first format F1, the video content of the two images (F1, F2) having at least one common part, implementing the following steps:
- coding (2) of the second picture (F2) to provide coded data for a base layer of the coded data flow,
- zoom (3) of the second picture (F2) to obtain a low resolution zoomed picture (Fz) of dimensions those of the first picture (F1) for the common video part,
- coding (5) of the first high resolution picture (F1) for what relates to the image blocks of the non common port, to supply coded data to an upper layer of the coded data flow and using at least one of the following modes:
- predictive inter layer coding using a previous low resolution zoomed picture in which a predicted block and a motion vector defining this block is determined,
- predictive inter layer coding using a current low resolution zoomed picture in which a predicted block and a motion vector defining this block is determined,

2. Method according to claim 1, **characterized in that** the high resolution is realised according to the following steps:
- coding of the picture zone to the common video content to supply a picture of residues relating to the prediction picture (Fz),
- decoding this zone to provide a reconstructed common zone,
- coding the non-common part using at least the inter-spatial coding mode consisting in using the reconstructed common mode as prediction picture to determine a predicted block.

3. Method according to claim 1, **characterized in that** the picture (F2) used for the zoom is a reconstructed picture obtained by local decoding of the coded picture (F2).

4. Method according to claim 1, **characterized in that** the inter-layer predictive coding comprises a sub-mode in which the predicted macroblock is the macroblock being located at the same place as the macroblock to code.

5. Method according to claim 1, **characterized in that** the zoom consists in an oversampling and filtering of the picture.

6. Method according to claim 1, **characterized in that** the video images are subband pictures obtained by temporal decomposition of the wavelet or subband coding type of the source pictures.

7. Method for decoding a flow of digital data structured into at least one base layer comprising data relative to a low resolution image and an upper layer comprising data relating to a high resolution picture, the low resolution picture corresponding to at least a video part of the high resolution picture, comprising the following steps:
- extraction of data from the base layer relating to the low resolution picture and decoding the low resolution picture,
- zoom of the decoded picture (13) to provide a zoomed (Fz) picture (12),
- extraction and decoding of data from the upper layer for what relates to the image blocks of the non common part, implementing at least one of the following decoding modes:
- inter-layer predictive mode using a block in the previous decoded and zoomed low resolution picture (Fz) designated by a motion vector,
- inter-layer predictive mode using a block (27) in the current decoded and zoomed low resolution picture, designated by a motion vector.

8. Decoding method according claim 7, the upper layer being constituted of coded data corresponding to a residues picture relating to a prediction picture (Fz) for the common part to the low resolution picture and coded data corresponding to an edge picture relating to the non-common part, **characterized in that** during the decoding of the high resolution picture, the common part (22) of the low resolution picture is first decoded from the residues picture and the zoomed picture and **in that** the edge picture (24, 25) is then decoded by implementing at least one inter-spatial mode using the blocks of the said decoded common part (22) determined by motion vectors.

## Patentansprüche

1. Verfahren zur hierarchischen Kodierung von Videobildern mit unterschiedlichen nicht proportionalen Formaten, um einen Fluss kodierter Daten, ein erstes Bild (F1) mit einem Format F1 und ein zweites Bild (F2) mit einem Format F2 mit einer Auflösung, die geringer ist als bei dem ersten Format F1, zu erzielen, wobei der Videoinhalt der beiden Bilder (F1, F2) mindestens einen gemeinsamen Teil aufweist, bei dem die folgenden Schritte umgesetzt werden:
- Kodierung (2) des zweiten Bildes (F2), um kodierte Daten für eine Basisschicht des Flusses kodierter Daten bereitzustellen,
- Zoomen (3) des zweiten Bildes (F2), um für den gemeinsamen Videoteil ein gezoomtes niedrigauflösendes Bild (Fz) mit Abmessungen, die denjenigen des ersten Bildes (F1) entsprechen, zu erzielen,
- Kodierung (5) des ersten hochauflösenden Bildes (F1) hinsichtlich Bildblöcke des nicht gemeinsamen Teils, um kodierte Daten für eine obere Schicht des Flusses kodierter Daten bereitzustellen, unter Nutzung mindestens eines der folgenden Modi:
- prädiktive Zwischenschicht-Kodierung unter Verwendung eines vorhergehenden gezoomten niedrigauflösenden Bildes als prädiktiven Bildes, in dem ein prädizierter Block bestimmt wird, und eines diesen Block definierenden Bewegungsvektors,
- prädiktive Zwischenschicht-Kodierung unter Nutzung eines aktuellen gezoomten niedrigauflösenden Bildes als prädiktiven Bildes, in dem ein prädizierter Block bestimmt wird, und eines diesen Block definierenden Bewegungsvektors.

2. Verfahren nach Anspruch 1, **dadurch gekennzeichnet, dass** die Kodierung (5) des hochauflösenden Bildes gemäß den folgenden Schritten durchgeführt wird:
- Kodierung des Bildbereichs mit dem gemeinsamen Videoinhalt, um ein Bild von Rückständen betreffend das prädiktive Bild (Fz) bereitzustellen,
- Dekodierung dieses Bereichs, um einen gemeinsamen wiederhergestellten Bereich zu erzielen,
- Kodierung des nicht gemeinsamen Teils unter Verwendung mindestens des Zwischenraum-Kodiermodus, der darin besteht, den wiederhergestellten gemeinsamen Bereich als prädiktives Bild für die Bestimmung eines prädizierten Blocks zu nutzen.

3. Verfahren nach Anspruch 1, **dadurch gekennzeichnet, dass** es sich bei dem zum Zoomen verwendeten Bild (F2) um ein wiederhergestelltes Bild handelt, das sich aus der lokalen Dekodierung (3) des kodierten Bildes (F2) ergibt.

4. Verfahren nach Anspruch 1, **dadurch gekennzeichnet, dass** die prädiktive Zwischenschicht-Kodierung einen Submodus umfasst, bei dem der prädizierte Makroblock der Makroblock ist, der sich an derselben Stelle wie der zu kodierende Makroblock befindet.

5. Verfahren nach Anspruch 1, **dadurch gekennzeichnet, dass** das Zoomen in einer Überabtastung und Filterung des Bildes besteht.

6. Verfahren nach Anspruch 1, **dadurch gekennzeichnet, dass** es sich bei den Videobildern um Subband-Bilder handelt, die sich aus der zeitlichen Wavelet-Zerlegung oder Subband-Kodierung der Quellbilder ergeben.

7. Verfahren zum Dekodieren eines Flusses digitaler Daten, der in mindestens eine Basisschicht mit Daten zu einem niedrigauflösenden Bild und eine obere Schicht mit Daten zu einem hochauflösenden Bild gegliedert ist, wobei das niedrigauflösende Bild mindestens einem Videoteil des hochauflösenden Bildes entspricht, mit den folgenden Schritten:
- Extrahieren von Daten zu dem niedrigauflösenden Bild aus der Basisschicht und Dekodierung des niedrigauflösenden Bildes,
- Zoomen des dekodierten Bildes (13), um ein gezoomtes Bild (Fz, 12) zu erzielen,
- Extrahieren und Dekodierung von Daten aus der oberen Schicht hinsichtlich Bildblöcke des nicht gemeinsamen Teils unter Einsatz mindestens eines der folgenden Dekodiermodi:
- prädiktiver Zwischenschicht-Modus unter Nutzung eines durch einen Bewegungsvektor bestimmten Blocks in dem vorhergehenden dekodierten und gezoomten niedrigauflösenden Bild (Fz),
- prädiktiver Zwischenschicht-Modus unter Nutzung eines durch einen Bewegungsvektor bestimmten Blocks (27) in dem aktuellen dekodierten und gezoomten niedrigauflösenden Bildes.

8. Dekodierungsverfahren nach Anspruch 7, wobei die obere Schicht durch kodierte Daten, die einem Bild von Rückständen betreffend ein prädiktives Bild (Fz) für den dem niedrigauflösenden Bild gemeinsamen Teil entsprechen, und durch kodierte Daten, die einem Kantenbild betreffend den nicht gemeinsamen Teil entsprechen, gebildet wird, **dadurch gekennzeichnet, dass** bei der Dekodierung des hochauflösenden Bildes zunächst der dem niedrigauflösenden Bild gemeinsame Teil (22) ausgehend von dem Bild von Rückständen und von dem gezoomten Bild dekodiert wird und dass anschließend das Kantenbild (24, 25) unter Einsatz mindestens eines Zwischenraummodus, der durch Bewegungsvektoren bestimmte Blöcke in dem genannten dekodierten gemeinsamen Teil (22) nutzt, dekodiert wird.
